# EUROPÄISCHE PATENTSCHRIFT

(11) **EP 0 482 651 B1**
(45) Veröffentlichungstag und Bekanntmachung des Hinweises auf die Patenterteilung: **26.01.1994**
(21) Anmeldenummer: 91118181.6
(22) Anmeldetag: 24.10.1991
(51) Int. Cl.: A23L 2/10, A23L 1/222

(54) **Verfahren zur Herstellung von hochkonzentrierten Fruchtaromen aus kondensierten Fruchtbrüden**
Process for the production of high concentrated fruit-flavors from condensed fruit vapors
Procédé pour la production d'arômes de fruit fort concentrés à partir de vapeurs de fruit condensé

(30) Priorität: 25.10.1990 DE 4033934
(43) Veröffentlichungstag der Anmeldung: 29.04.1992
(73) Patentinhaber: SKW Trostberg Aktiengesellschaft, 83308 Trostberg (DE)
(72) Erfinder: Simon, Andrea, W-8221 Seebruck (DE); Cully, Jan, Dr., W-8268 Garching (DE); Vollbrecht, Heinz-Rüdiger, Dr., W-8226 Altenmarkt (DE)
(74) Vertreter: Huber, Bernhard, Dipl.-Chem.

(56) Entgegenhaltungen:
- EP-A- 0 224 215
- EP-A- 0 240 067

## Beschreibung

Gegenstand der vorliegenden Erfindung ist ein Verfahren zur Herstellung von hochkonzentrierten Fruchtaromen aus kondensierten Fruchtbrüden, wie sie bei der Herstellung von Konfitüren oder Frucht- bzw. Fruchtsaftkonzentraten anfallen.

Zur Herstellung von Konfitüre werden Zucker, Früchte, Pektinlösung und Säurelösung gemischt und danach im offenen Kessel bei Atmosphärendruck oder in Vakuumkochanlagen aufgekocht.

Für die Weiterverwendung der beim Kochen abgedampften Brüden ist die Anwendung eines Kochverfahrens bei Atmosphärendruck ungeeignet, da durch die hohe Temperaturbelastung das Fruchtaroma zu stark geschädigt wird. Beim Kochen in Vakuumanlagen beträgt die Temperatur jedoch maximal 65 bis 70°C, so daß die durch Kondensation erhaltenen Fruchtbrüden weiterverarbeitet werden können.

Die Herstellung von Fruchtkonzentraten, die beispielsweise für die Formulierung von Fruchtjoghurts, Säften oder Nektaren benötigt werden, erfolgt üblicherweise entweder durch Gefrierkonzentrierung oder durch Verdampfung. Die Geschmacksschädigung wie auch die Aroma- und Farbverluste sind bei der Gefrierkonzentrierung mit nachfolgender Gefrierlagerung zwar am geringsten, allerdings ist diese Methode auch relativ teuer. Bei der kostengünstigeren Eindampf-Methode muß man jedoch insbesondere bei empfindlichen Saftarten mit gewissen Qualitätseinbußen rechnen. Den auftretenden Verlusten versucht man dadurch zu begegnen, daß man die Aromastoffe in einer ersten Verdampfungsstufe abtrennt und die auf diese Weise erhaltenen aromahaltigen Brüden in einer zweiten Stufe einer Rektifikation unterwirft, um die Aromakomponenten weiter anzureichern. Diese beiden Stufen werden in sog. kombinierten Eindampf- und Aromagewinnungsanlagen durchgeführt, wobei man beispielsweise aus 100 bis 200 l Saft etwa 1 l Aromakonzentrat gewinnen kann. Dieses Aromakonzentrat kann beispielsweise vor dem Abfüllen zum rückverdünnten Saft zugegeben werden. Nachteilig bei den auf diese Weise hergestellten Aromakonzentraten ist die geringe Lagerstabilität, die im wesentlichen auf den noch hohen Wassergehalt von 90 bis 99 Gew.-% zurückzuführen ist. Für den Safthersteller bedeutet dies beispielsweise, daß er von frisch hergestelltem Aromakonzentrat z.B. 1 l auf 100 l rückverdünnten Saft zugeben muß, um einen guten Geschmack zu erzielen. Nach einigen Monaten Lagerzeit ist es aber nötig, 5 l Aromakonzentrat zur gleichen Menge Saft zuzugeben, um die gleiche Aromaintensität zu erhalten. Dies ist nicht nur in wirtschaftlicher Hinsicht problematisch, sondern erschwert auch die Herstellung qualitativ gleichbleibender Produkte.

Der vorliegenden Erfindung lag daher die Aufgabe zugrunde, ein Verfahren zur Herstellung von hochkonzentrierten Fruchtaromen aus kondensierten Fruchtbrüden zu entwickeln, welches die genannten Nachteile des Standes der Technik nicht aufweist, sondern in technisch einfacher Weise ein Aromakonzentrat liefert, das einen deutlich geringeren Wassergehalt und gute Lagerstabilität aufweist.

Diese Aufgabe wurde erfindungsgemäß dadurch gelöst, daß man
a) die Fruchtaromen in den kondensierten Fruchtbrüden bis zu einem Gehalt von 0,05 bis 1 Gew.-% nach den üblichen Methoden aufkonzentriert,
b) das Konzentrat aus Stufe a) einer Extraktion mit komprimiertem Kohlendioxid bei 60 bis 180 bar und 10 bis 50°C unterwirft sowie
c) nach Entspannung des Kohlendioxids und gegebenenfalls nach Zugabe von Wasser die aromareichere ölige Phase von der aromaärmeren wäßrigen Phase abtrennt.

Es hat sich nämlich überraschenderweise gezeigt, daß man auf diese Weise aus sehr niedrig konzentrierten Fruchtbrüden wasserarme Fruchtaroma-Konzentrate erhält, die gute sensorische Eigenschaften besitzen. Es ist zwar bekannt, daß man mit Hilfe der CO₂-Hochdruckextraktion aus fruchthaltigen Stoffen wie z.B. Apfelschalen (vgl. E. Bundschuh et al., Deutsche Lebensmittel-Rundschau 84 (1988), S. 205-10) oder synthetischen Fruchtessenzen (vgl. V.J. Krukonis "Charakterization and Measurement of Flavor Compounds" ed. D.D. Bills and C.J. Mussinan ACS Symp. Series No. 289, 1985) Fruchtaromen gewinnen kann, doch handelt es sich um bereits vergleichsweise hochkonzentrierte Ausgangsverbindungen. Außerdem lassen sich auf diese Weise nur niedrigkonzentrierte Fruchtaromen herstellen.

Beim Verfahren entsprechend der vorliegenden Erfindung werden die Fruchtaromen aus kondensierten Fruchtbrüden, wie sie beim Kochen von Konfitüren oder beim Eindampfen von Fruchtsäften in einer Konzentration von 0,0005 bis 0,001 Gew.-% anfallen, in einem dreistufigen Verfahren zu einem wasserfreien Fruchtaroma-Konzentrat aufgearbeitet.

Die Fruchtaromen können von allen üblichen Fruchtsorten stammen, wie sie in der Lebensmittelindustrie üblicherweise eingesetzt werden, wie z.B. Äpfel, Birnen, Pflaumen, Kirschen, Aprikosen, Orangen, Erdbeeren, Himbeeren, Heidelbeeren

In der ersten Stufe werden die aromahaltigen Fruchtbrüden bis zu einem Aromagehalt von 0,05 bis 1 Gew.-% aufkonzentriert, wobei dieser Aufkonzentrierungsschritt nach den üblichen Methoden entsprechend dem Stand der Technik durchgeführt werden kann.

Als übliche Verfahren sind insbesondere Destillations-, Rektifikations- oder Membranverfahren geeignet. Gemäß einer bevorzugten Ausführungsform wird die Anreicherung der Aromastoffe durch eine Vakuumdestillation und insbesondere bei einem Druck von 20 bis 80 mbar und einer Temperatur von 15 bis 40°C durchgeführt. Auf diese Weise gelingt die Anreicherung besonders schonend und ohne große Verluste.

Im Anschluß daran werden die angereicherten Fruchtaromen einer Extraktion mit komprimiertem Kohlendioxid unterworfen, wobei die Extraktion bei einem Druck von 60 bis 180 bar, vorzugsweise 80 bis 120 bar, und einer Temperatur von 10 bis 50°C, vorzugsweise 25 bis 40°C durchgeführt wird. Das Mengenverhältnis von CO₂ zu Ausgangsaromakonzentrat kann in weiten Grenzen variiert werden. Es hat sich aus wirtschaftlichen Gründen jedoch als besonders vorteilhaft erwiesen, das Verhältnis von CO₂-Gasmenge zu Aromakonzentrat aus Stufe a) des erfindungsgemäßen Verfahrens auf 1 : 5 bis 5 : 1 einzustellen.

Die CO₂-Extraktion kann in den üblichen Hochdruckbehältern erfolgen. Aus Gründen der besseren Trennung und Wirtschaftlichkeit wird die Extraktion jedoch vorzugsweise in einer Füllkörperkolonne durchgeführt, wobei komprimiertes CO₂ und das Aromakonzentrat im Gegenstrom geführt werden.

Im Anschluß an die CO₂-Extraktion wird der mit Aromastoffen beladene CO₂-Strom in einem Abscheidebehälter bei einem Druck von 20 bis 60 bar und einer Temperatur von 10 bis 40°C entspannt, wobei im Abscheidebehälter die Fruchtaromen bereits in hochkonzentrierter Form anfallen, die jedoch noch gewisse Mengen an Wasser und Ethanol aufweisen, welche in der Regel bei ca. 50 Gew.-%, bezogen auf das Gewicht des Fruchtaromen-Konzentrats, liegen. Das CO₂-Gas wird unter den Abscheidebedingungen verdampft und wird nach dessen Komprimierung wieder in die CO₂-Extraktionsstufe zurückgeführt.

Es ist erfindungswesentlich, daß man nach der Entspannung des Kohlendioxids eine Abtrennung der aromareicheren öligen Phase von der aromaärmeren wäßrigen Phase vornimmt. Diese Abtrennung der öligen von der wäßrigen Phase kann nach den üblichen Zweiphasentrennmethoden, wie z.B. Dekantieren oder Arbeiten mit Scheidetrichter, problemlos durchgeführt werden. Falls sich eine stabile Öl/Wasser-Emulsion gebildet hat, ist es im Rahmen der vorliegenden Erfindung auch möglich, emulsionsbrechende Mittel, wie z.B. Wasser oder Salzlösungen, einzusetzen. Auf diese Weise erhält man ein wasserarmes Aromakonzentrat (H₂O-Gehalt < 10 Gew.-%), das außerdem nur einen vergleichsweise geringen Ethanol-Gehalt (< 25 Gew.-%) aufweist. Dieses Aromakonzentrat ist direkt für die Formulierung von Nahrungsmitteln einsetzbar. Die abgetrennte wäßrige Phase, die neben Wasser und Alkohol noch gewisse Anteile an Fruchtaromen enthält, kann ohne weiteres in die Extraktionsstufe zurückgeführt werden. Damit wird sichergestellt, daß beim erfindungsgemäßen Verfahren die Aromaverluste auf ein Minimum reduziert werden.

Aufgrund dieser Rückführungsmöglichkeiten sowohl des Extraktionsmittels CO₂ als auch der anfallenden wäßrigen Aromaphase eignet sich das erfindungsgemäße Verfahren besonders für einen kontinuierlichen Betrieb.

Dies ist ein weiterer wichtiger Vorteil neben der Tatsache, daß man mit Hilfe des erfindungsgemäßen Verfahrens aus sehr niedrig konzentrierten Fruchtbrüden-Kondensaten mit geringem technischen Aufwand ein hochkonzentriertes Fruchtaroma herstellen kann, das relativ niedrige Gehalte an Wasser und Ethanol besitzt und gute sensorische Eigenschaften bzw. eine hohe Lagerstabilität aufweist.

Die nachfolgenden Beispiele sollen die Erfindung näher erläutern.

### Beispiel 1

### Gewinnung eines hochkonzentrierten Apfelaromaöls

Vom frisch gepreßtem Apfelsaft wurden im Verdampfer 10 bis 15 Gew.-% des Saftes abgedampft. Die aromareichen Brüden wurden im unteren Drittel in eine Rektifizierkolonne mit einer Temperatur von 105°C eingeleitet. Am Kolonnenboden wird das Lutterwasser abgezogen. Bei der Aktivierung wurden die Aromastoffe in der Dampfphase konzentriert und von den schwerflüchtigen Komponenten abgetrennt. Die leichtflüchtigen Aromakomponenten wurden im Oberflächenkondensator gekühlt und abgezogen. Die größere Hälfte des Aromakondensates geht als Rücklauf in die Kolonne zurück. Auf diese Weise ergeben sich aus ca. 150 l Saft 1 l Apfelbrüdenkondensat.

10 kg dieses Apfelbrüdenkondensats mit einem Ethanolgehalt von 4,0 Gew.-% und ca. 0,14 Gew.-% Aromastoffen wurden kontinuierlich in einer Hochdruck-Extraktionskolonne im Gegenstrom mit CO₂ extrahiert. Die Extraktion wurde bei p = 80 bar und T = 35°C durchgeführt. Der spezifische CO₂-Bedarf betrug 1 kg CO₂ pro kg Ausgangsmaterial. Als Extrakt wurden 27 g Apfelaroma mit 36 Gew.-% Ethanol, 14 Gew.-% H₂O und 50 Gew.-% Aromastoffen erhalten. Durch eine nachfolgende Separation (ohne weitere Zugabe von Wasser) in eine ölige und eine wäßrige Phase konnten als Endprodukt 19 g Apfelaromakonzentrat mit 22,4 Gew.-% Ethanol, 68 Gew.-% Aromastoffen und 9,3 Gew.-% Wasser gewonnen werden.

### Beispiel 2

### Gewinnung eines hochkonzentrierten Erdbeeraromas

Vor der endgültigen Konzentrierung der Erdbeeren auf 73 Gew.-% Trockensubstanz wurden im Fallstromverdampfer bei 60°C ca. 10 % aromahaltige Brüden abgedampft. Diese wurden in einer Rektifizierkolonne unter Vakuum (ca. 80 mbar) bei 40°C aufkonzentriert. Aus 100 kg Erdbeeren entsteht auf diese Weise 1 l aromahaltiges Erdbeerbrüdenkondensat.

10 kg dieses Erdbeerbrüdenkondensats mit einem Ethanolgehalt von 3,8 Gew.-% und ca. 0,2 Gew.-% Aromastoffen wurde kontinuierlich in einer Hochdruck-Extraktionskolonne im Gegenstrom mit CO₂ extrahiert. Die Extraktion wurde kontinuierlich bei p = 120 bar und T = 30°C durchgeführt. Der spezifische CO₂-Bedarf betrug 1 kg CO₂ pro kg Ausgangsmaterial. Als Extrakt wurden 39 g Erdbeeraroma mit 33 Gew.-% Ethanol, 53 Gew.-% Aromastoffen und 14 Gew.-% H₂O erhalten.

Nach Zugabe von 35 g Wasser wird eine Trennung der öligen und wäßrigen Phase vorgenommen. Als Endprodukt wurden auf diese Weise 25 g Erdbeeraroma-Konzentrat mit 70 Gew.-% Aromastoffen, 19,6 Gew.-% Ethanol und 10,4 Gew.-% Wasser erhalten.

## Patentansprüche

1. Verfahren zur Herstellung von hochkonzentrierten Fruchtaromen aus kondensierten Fruchtbrüden,
**dadurch gekennzeichnet**, daß man
a) die Fruchtaromen in den Fruchtbrüden bis zu einem Gehalt von 0,05 bis 1 Gew.-% nach an sich bekannten Methoden aufkonzentriert,
b) das Konzentrat aus Stufe a) einer Extraktion mit komprimiertem Kohlendioxid bei 60 bis 180 bar und 10 bis 50°C unterwirft sowie
c) nach der Entspannung des Kohlendioxids und gegebenenfalls nach Zugabe von Wasser die aromareichere ölige Phase von der aromaärmeren wäßrigen Phase abtrennt.

2. Verfahren nach Anspruch 1,
**dadurch gekennzeichnet**, daß man die Aufkonzentrierung der kondensierten Fruchtbrüden durch eine Vakuumdestillation vornimmt.

3. Verfahren nach Anspruch 2,
**dadurch gekennzeichnet**, daß man die Vakuumdestillation bei einem Druck von 20 bis 80 mbar und einer Temperatur von 15 bis 40°C durchführt.

4. Verfahren nach einem der Ansprüche 1 bis 3,
**dadurch gekennzeichnet**, daß man die CO₂-Extraktion bei einem Druck von 80 bis 120 bar und einer Temperatur von 25 bis 40°C durchführt.

5. Verfahren nach einem der Ansprüche 1 bis 4,
**dadurch gekennzeichnet**, daß das Verhältnis von CO₂-Gasmenge zu Aromakonzentrat aus Stufe a) 1 : 5 bis 5: 1 beträgt.

6. Verfahren nach einem der Ansprüche 1 bis 5,
**dadurch gekennzeichnet**, daß die CO₂-Extraktion kontinuierlich in einer Füllkörperkolonne im Gegenstromprinzip betrieben wird.

7. Verfahren nach einem der Ansprüche 1 bis 6,
**dadurch gekennzeichnet**, daß man die Entspannung des Kohlendioxids in einem Abscheidebehälter bei einem Druck von 20 bis 60 bar und einer Temperatur von 10 bis 40°C vornimmt.

8. Verfahren nach einem der Ansprüche 1 bis 7,
**dadurch gekennzeichnet**, daß man die aromaärmere wäßrige Phase in die CO₂-Extraktionsstufe zurückführt.

## Claims

1. Process for the production of highly concentrated fruit aromas from condensed fruit vapours, characterised in that one
a) concentrates the fruit aromas in the fruit vapours to a content of 0.05 to 1 wt.% according to per se known methods,
b) subjects the concentrate from step a) to an extraction with compressed carbon dioxide at 60 to 180 bar and 10 to 50°C, as well as
c) after decompression of the carbon dioxide and possibly after addition of water, separates the aroma-richer oily phase from the aroma-poorer aqueous phase.

2. Process according to claim 1, characterised in that one carries out the concentration of the condensed fruit vapours by a vacuum distillation.

3. Process according to claim 2, characterised in that one carries out the vacuum distillation at a pressure of 20 to 80 mbar and at a temperature of 15 to 40°C.

4. Process according to one of claims 1 to 3, characterised in that one carries out the CO₂ extraction at a pressure of 80 to 120 bar and a temperature of 25 to 40°C.

5. Process according to one of claims 1 to 4, characterised in that the ratio of CO₂ gas amount to aroma concentrate from step a) amounts to 1:5 to 5:1.

6. Process according to one of claims 1 to 5, characterised in that the CO₂ extraction is carried out continuously in the countercurrent principle in a packed column.

7. Process according to one of claims 1 to 6, characterised in that one carries out the decompression of the carbon dioxide in a separation container at a pressure of 20 to 60 bar and a temperature of 10 to 40°C.

8. Process according to any one of claims 1 to 7, characterised in that one returns the aroma-poorer aqueous phase into the CO₂ extraction step.

## Revendications

1. Procédé pour la production d'arômes de fruits fortement concentrés à partir de vapeur de fruits condensés, caractérisé en ce que :
a) l'on concentre les arômes de fruits dans les vapeurs de fruits jusqu'à une teneur de 0,05 jusqu'à 1 % en poids selon des méthodes connues per se,
b) on soumet le concentré provenant de l'étape a), à une extraction avec du dioxyde de carbone comprimé à 60 jusqu'à 180 bars et 10 jusqu'à 50°C,
c) après la détente du dioxyde de carbone éventuellement après addition d'eau, on sépare la phase huileuse plus riche en arôme de la phase aqueuse moins riche en arôme.

2. Procédé selon la revendication 1,
caractérisé en ce que l'on procède à la concentration des vapeurs de fruits condensés par une distillation sous vide.

3. Procédé selon la revendication 2,
caractérisé en ce que l'on effectue la distillation sous vide à une pression de 20 jusqu'à 80 millibars et à une température de 15 à 40°C.

4. Procédé selon l'une des revendications 1 à 3,
caractérisé en ce que l'on effectue l'extraction du CO₂ à une pression de 80 jusqu'à 120 bars et à une température de 25 à 40°C.

5. Procédé selon l'une des revendications 1 à 4,
caractérisé en ce que le rapport entre la quantité de gaz CO₂ et le concentré d'arôme provenant de l'étape a) est de 1 : 5 jusqu'à 5 : 1.

6. Procédé selon l'une des revendications 1 à 5,
caractérisé en ce que l'extraction du CO₂ s'effectue de façon continue dans une colonne à garnissage selon le principe à contre-courant.

7. Procédé selon l'une des revendications 1 à 6,
caractérisé en ce que l'on procède à la détente du dioxyde de carbone dans un récipient de séparation à une pression de 20 à 60 bars et à une température de 10 à 40°C.

8. Procédé selon l'une des revendications 1 à 7,
caractérisé en ce que l'on recycle la phase aqueuse moins riche en arôme dans l'étape d'extraction du CO₂.
